# EUROPEAN PATENT APPLICATION

(11) **EP 1 388 856 A2**
(43) Date of publication of application: **11.02.2004**
(21) Application number: 03254123.7
(22) Date of filing: 27.06.2003
(51) Int. Cl.: G11B 19/12, G11B 19/02

(54) **Apparatus and method for reproducing data**

(30) Priority: 23.07.2002 JP 2002213985
(71) Applicant: Pioneer Corporation, Tokyo-to (JP)
(72) Inventor: Yako, Isao, Pioneer Corporation, Kawagoe Works, Saitama-ken (JP)
(74) Representative: Haley, Stephen

(57) **Abstract**

An apparatus for reproducing data comprises a reproduction device, a detection device and a subsequent processing-execution device. The reproduction device receives a data constellation, which includes content data and control data for controlling reproduction of the content data, and reproduces the content data based on the control data. The detection device detects whether or not the reproduction of the content data by means of the reproduction device is to be halted based on the control data. The subsequent processing-execution device executes a subsequent processing as previously set, when the detection device obtains detection results that the reproduction of the content data by means of the reproduction device is to be halted.

## Description

The present invention relates to apparatus and method for reproducing data constellation, which is composed for example of content data such as video data and audio data, as well as control data for controlling reproduction of the content data.

### Description of the Related Art

With respect to the conventional analog videotape, once a user starts a video layer reproducing the videotape, reproduction does not halt so that the videotape is reproduced through, unless the user inputs instructions to halt the reproduction.

For example, a DVD has recently been widely used as a video recording medium replacing the videotape. Such a DVD stores thereon video data and control data for controlling reproduction of the video data. The above-mentioned control data include a command to halt the reproduction of the video data (for example, an EXIT command). Accordingly, a DVD player reads the control data for giving a command to halt the reproduction of the video data, during reproducing the DVD by means of the DVD player in accordance with the user's instructions. Execution of such a command causes the DVD player to halt automatically the reproduction of the video data in accordance with the control data.

In case of the DVD video, the video data recorded on the DVD is theoretically divided into at least one data unit (for example, a PGC (Program Chain) according to the DVD video standard). In addition, the DVD stores thereon the control data, which designates a reproduction mode for these data units (for example, a PGCI (Program Chain Information) according to the DVD video standard). The DVD player reproduces the respective data unit in accordance with the reproduction mode as designated by the control data. In this case, no existence of control data for designating the data unit to be reproduced next, at the time when the reproduction of the single data unit is completed, causes the DVD player to halt automatically the reproduction of the video data.

However, an automatic halt of reproduction of data such as the video data based on the control data recorded on the DVD causes a problem that a continuous reproduction of the video data cannot be conducted.

In addition, when the reproduction of data such as the video data is automatically halted on the basis of the control data recorded on the DVD, it is necessary for the user to input the instructions to resume the reproduction of the video data to the DVD player every time the reproduction of the video data halts, thus inhibiting improvement in operability and convenience of the DVD player.

An object of the present invention, which was made in view of the above-mentioned problems, is therefore to provide apparatus and method for reproducing data, which prevent reproduction of content data from being automatically halted, thus improving operability and convenience.

In order to attain the aforementioned object, the apparatus of the first aspect of the present invention for reproducing data, comprises:
a reproduction device for receiving a data constellation, which includes content data and control data for controlling reproduction of said content data, and reproducing said content data based on said control data;
a detection device for detecting whether or not the reproduction of said content data by means of said reproduction device is to be halted based on said control data; and
a subsequent processing-execution device for executing a subsequent processing as previously set, when said detection device obtains detection results that the reproduction of said content data by means of said reproduction device is to be halted.

In order to attain the aforementioned object, a computer program of the second aspect of the present invention, which is to be executed by a computer, causes the computer to function as the above-mentioned apparatus of the present invention.

In order to attain the aforementioned object, a method of the third aspect of the present invention for reproducing data, comprises:
a reproduction step for receiving a data constellation, which includes content data and control data for controlling reproduction of said content data, and reproducing said content data based on said control data;
a detection step for detecting whether or not the reproduction of said content data in said reproduction step is to be halted based on said control data; and
a subsequent processing-execution step for executing a subsequent processing as previously set, when there are obtained detection results that the reproduction of said content data in said reproduction step is to be halted.

**In the Drawings;**
FIG. 1 is a block diagram illustrating a structure of a DVD video player according to an example to which the present invention is applied;
FIG. 2 is a perspective view illustrating an exterior appearance of a main body of the DVD video player according to the example of the present invention;
FIG. 3 is a schematic view illustrating a reproduction structure of data recorded on a DVD;
FIG. 4 is a schematic view illustrating a structure of a PGCI (Program Chain Information);
FIG. 5 is a schematic view illustrating a structure of a VOB (Video Object);
FIG. 6 is a flowchart illustrating a setting processing and a reproduction control processing for a subsequent processing;
FIG. 7 is a flowchart, which follows the flowchart as shown in FIG. 6, illustrating the setting processing for the subsequent processing and the reproduction control processing; and
FIG. 8 is a descriptive view illustrating a setting operation of the subsequent processing.

Now, embodiments of the present invention will be described in detail below with reference to the accompanying drawings. A data reproducing apparatus according to the embodiment of the present invention comprises: a reproduction device for receiving a data constellation, which includes content data and control data for controlling reproduction of the content data, and reproducing the content data based on the control data; a detection device for detecting whether or not the reproduction of the content data by means of the reproduction device is to be halted based on the control data; and a subsequent processing-execution device for executing a subsequent processing as previously set, when the detection device obtains detection results that the reproduction of the content data by means of the reproduction device is to be halted.

The content data are data to be reproduced, for example, video data such as animation data and still picture data, audio data and caption data. The control data are data, which control reproduction of the content data, and include for example reproduction order, an address of data to be reproduced, a command to halt reproduction and reproduction interval as designated.

The content data and the control data are normally combined and supplied in the form of a single data constellation. For example, the content data and the control data are recorded in a single recording medium. The content data and the control data may be supplied in the form of the single data constellation through a communication device. Alternatively, the content data and the control data may be supplied from the respective supply sources and inputted into the reproduction device to constitute a single data constellation.

The reproduction device receives the data constellation, which includes the content data and the control data, and reproduces the content data based on the control data. In case where the data constellation is recorded in a recording medium, the reproduction device includes a reading unit such as an optical pickup or a magnetic head, for reading the data constellation, and a data processing unit for decoding/demodulating the data constellation as read out by means of the reading unit.

The detection device detects whether or not reproduction of the content data by the reproduction device is to be halted on the basis of the control data.

The control data, which constitute a part of the data constellation in cooperation with the content data and control reproduction of the content data, includes, for example, a command to halt the reproduction of the content data. The detection device may detects whether the control data giving a command to halt the reproduction of the content data have been used or not, thus leading to detection whether or not reproduction of the content data by the reproduction device is to be halted on the basis of the control data.

There may be a case where the data constellation includes the content data, which are divided into at least one data unit, and the control data for designating a reproduction mode (for example, a reproduction order) for these data units (which control data includes data for designating an address number of data to be reproduced), and the reproduction device reproduces the respective data unit on the basis of the reproduction mode designated by the control data. In such a case, the reproduction of the content data by means of the reproduction device halts, when there exists no control data for designating the data unit to be reproduced next; or the control data for designating the data unit to be reproduced next exists, while there exists no data unit designated by the above-mentioned control data, or the control data for designating the reproduction mode has not designated any data unit to be reproduced next. In view of these facts, the detection device may detect non-existence of control data for designating the data unit to be reproduced next, or non-existence of the data unit to be reproduced next or a non-designated state thereof, thus leading to detection whether or not reproduction of the content data by the reproduction device is to be halted on the basis of the control data.

The subsequent processing-execution device executes a subsequent processing as previously set, when the detection device obtains the detection results that the reproduction of the content data by means of the reproduction device is to be halted.

The subsequent processing includes conceivable processing such as reproducing of a menu for the content data, reproducing of the content data as designated by the user, outputting of a message for prompting the user to input a predetermined instruction, or offering a plurality of processing to the user and outputting of a message for prompting the user to select any one of the plurality of processing.

In case where the reproduction device includes a receiving unit for receiving a recording medium in which the data constellation has been recorded, and a reading unit for reading the data constellation from the recording medium to reproduce the content data on the control data, the subsequent processing may unload (i.e., eject) the recording medium from the receiving unit. Such a structure is suitably applicable to a case in which the data reproduction device is of the single type DVD player.

In case where the reproduction device includes a reading unit for reading the data constellation from one of a plurality of recording media to reproduce the content data based on the control data, replacing the recording medium with another recording medium from which the data constellation is to be read out may be carried out as the subsequent processing. Such a structure is suitably applicable to a case in which the data reproduction device is provided with a disc changer such as a DVD changer.

In case where the reproduction device is configured so as to read the data constellation from the recording medium in which the data constellation has been recorded, and reproduce the content data based on the control data included in the data constellation as read out, a reproduction termination processing for the content data recorded in the recording medium and then, a reproduction preparation processing for the next reproduction start may be carried out as the subsequent processing. The reproduction preparation processing is processing to be executed when the disc is loaded into the player. More specifically, in the embodiment of the present invention, there is carried out, as the subsequent processing, the same processing as that to be executed when a recording medium is newly loaded into the data reproduction apparatus, while maintaining a state in which the recording medium is received in the data reproduction apparatus.

However, the subsequent processing is not limited to those as described above.

The contents of the subsequent processing are previously set in the data reproduction apparatus. The contents of the subsequent processing are set for example when shipping the data reproduction apparatus, making an initial start thereof, turning the power on, or before or during the reproduction of the content data, and such contents are stored in a memory provided in the data reproduction apparatus.

In addition, the data reproduction apparatus may be provided with a subsequent processing-setting device for setting the contents of the subsequent processing through input of a user's instruction.

According to the data reproduction apparatus according to the embodiment of the present invention, when the reproduction of the content data halts based on the control data, which constitute a part of the data constellation in cooperation with the content data and control the reproduction of the content data, the subsequent processing as previously set can automatically be executed. As a result, setting the contents of the subsequent processing along the user's inclination make it possible to execute automatically the subsequent processing along eh user's inclination, as soon as the reproduction of the content data halts based on the control data. It is therefore possible to improve operability and convenience of the data reproduction apparatus. When the data reproduction apparatus is used for example as a video/audio reproduction apparatus, which is to be mounted on a car, it is possible to improve a driving environment for a driver.

Configuring the subsequent processing so as to reproduce a menu for the content data makes it possible for a user to take a look at the menu and give instructions to reproduce the desired content data, thus providing useful effects.

In addition, configuring the subsequent processing so as to reproduce the content data designated by the user makes it possible to provide a continuous reproduction of the content data.

Further, configuring the subsequent processing so as to output a message for prompting the user to input a predetermined instruction makes it possible for the user to conduct an appropriate reproduction operation by merely inputting the instruction in accordance with the message, thus improving the operability.

In case where the reproduction device reads the data constellation from the recording medium to reproduce it, configuring the subsequent processing so as to unload (i.e., eject) the recording medium from the receiving unit makes it possible for the user to perform rapidly a replacing operation of the recording medium.

In case where the reproduction device reads the data constellation from one of a plurality of recording media to reproduce it, configuring the subsequent processing so as to replace the recording medium with another recording medium from which the data constellation is to be read out makes it possible to reproduce the plurality of recording media one after another.

In case where the reproduction device reads the data constellation from the recording medium to reproduce it, configuring the subsequent processing so as to perform a reproduction termination processing for the content data recorded in the recording medium and a reproduction preparation processing for the next reproduction start makes it easy to reproduce again the same recording medium. If the user wishes to reproduce the same recording medium again from the start, it is more reasonable to carry out the same processing as that to be executed when a recording medium is newly loaded into the data reproduction apparatus, while maintaining a state in which the recording medium is received in the data reproduction apparatus, in comparison with a case where the recording medium is ejected from the data reproduction apparatus. The above-mentioned structure avoids an unnecessary operation of loading and unloading the recording medium, thus providing protection of the recording medium and preventing dust from being brought into the inside of the data reproduction apparatus. Such a structure is suitably applicable to a case where the data reproduction apparatus is provided with a cover for closing a slot for the recording medium.

Configuring the subsequent processing so as to offer a plurality of processing to the user and output a message for prompting the user to select any one of the plurality of processing makes it possible for the user to conduct an appropriate reproduction operation by merely inputting the instruction in accordance with the message, thus improving the operability.

In addition, providing the data reproduction apparatus with the subsequent processing-setting device for setting, through input of a user's instruction, the contents of the subsequent processing, which is to be executed by means of the subsequent processing-execution device, makes it possible to set the subsequent processing as desired by the user, so that the reproduction operation utilizing the data reproduction device can be carried out along the user's inclination.

The above-described embodiment may be realized in the form of exclusive apparatus with hardware or by reading a program by means of a computer.

### [Examples]

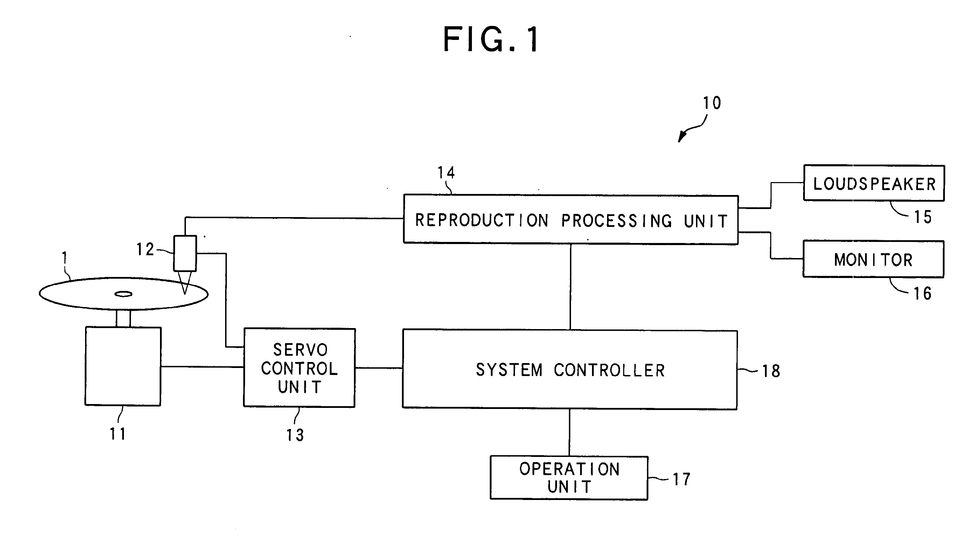

Now, examples of the present invention will be described below based on FIGS. 1 to 8. In the examples described below, the data reproducing apparatus of the present invention is applied to a DVD video player.

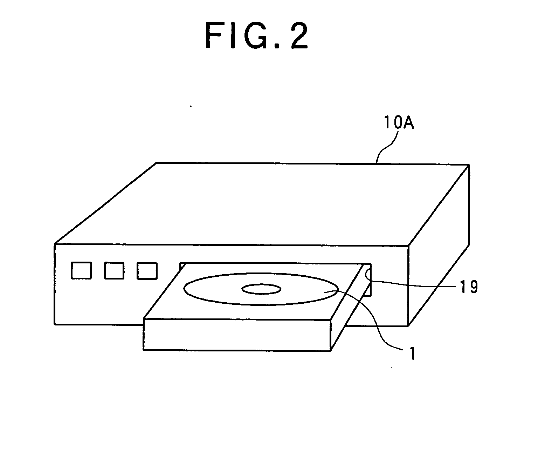

First, description will be given below of a structure pf the DVD video player according to the example of the present invention with reference to FIGS. 1 and 2. FIG. 1 is a block diagram illustrating the structure of the DVD video player according to the example. FIG. 2 is a perspective view illustrating an exterior appearance of a main body of the DVD video player according to the example of the present invention. As shown in FIG. 1, the DVD video player 10 includes a spindle motor 11, an optical pickup 12, a servo control unit 13, a reproduction processing unit 14, a loudspeaker 15, a monitor 16, an operation unit 17 and a system controller 18.

The spindle motor 11 rotates a DVD 1. The optical pickup 12 irradiates an optical beam on a recording surface of the DVD 1 to read the data recorded on the DVD 1. The servo control unit 13 controls rotation of the spindle motor 11 and a position on which the optical beam is irradiated by means of the optical pickup 12.

The reproduction processing unit 14 is provided with a demodulating section for demodulating the data read out from the DVD 1 by means of the optical pickup 12, and with a decoder for separating the data demodulated by the modulating section for example into video data and audio data and decoding these data (both of these structural components are not shown). The monitor 16 is a display device provided with a CRT (cathode ray tube), a plasma display or a liquid crystal display.

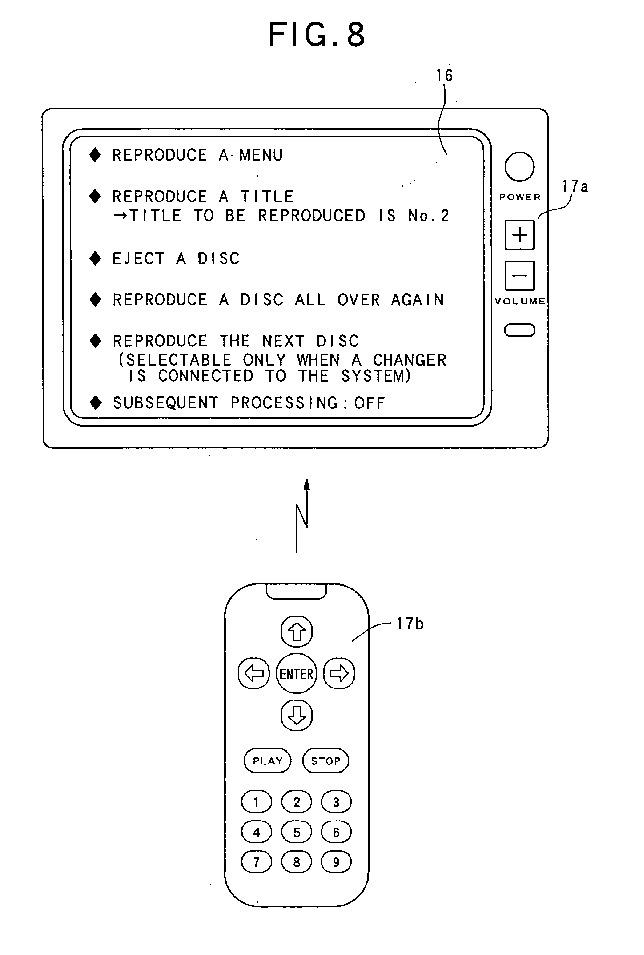

The operation unit 17 is an interface, which enables a user to input instructions for example on start or halt of reproduction, selection of functions and others. More specifically, such an interface includes switches provided on the main body of the DVD video player, switches 17a provided on the peripheral portion of the monitor 16 and a remote controller 17b (see FIGS. 21 and 8).

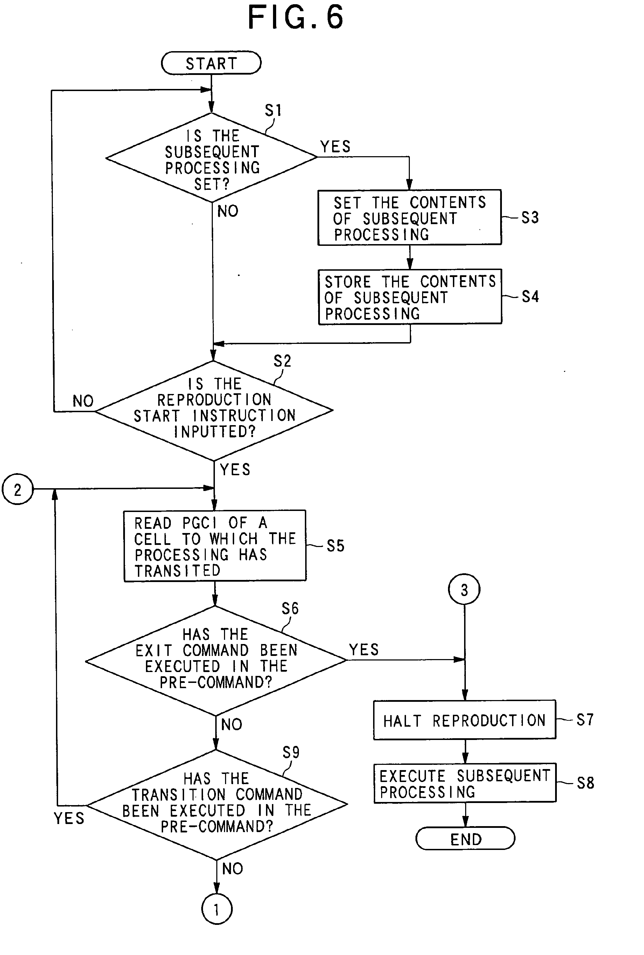

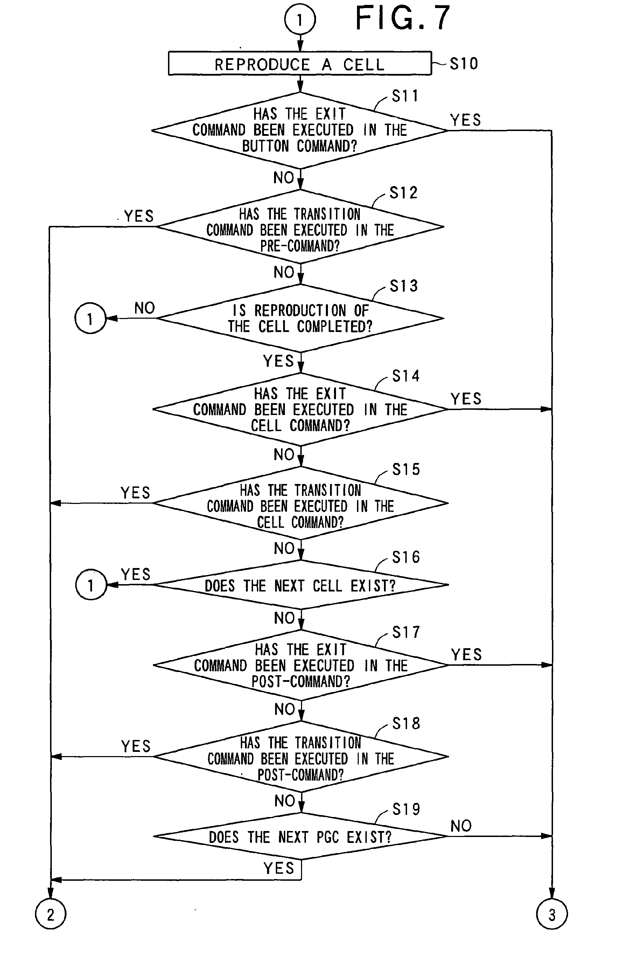

The system controller 18, which is provided arithmetic circuits and storage circuits, such as a CPU (Central Processing Unit), a ROM (Read-Only Memory), a RAM (Random Access Memory) and others, generally controls the DVD video player 10, and in addition, has control over reproduction of the DVD 1, and carries out the subsequent processing (see FIGS. 6 and 7) and the other processing in correspondence with the input of the user's instructions given through the operation unit 17.

As shown in FIG. 2, the main body 10A of the DVD video player 10, which includes therein the spindle motor 11, the optical pickup 12, the servo control unit 13, the reproduction processing unit 14, a part of the operation unit 17 and the system controller 18, is provided with a receiving unit 19 for loading/receiving the DVD 1. The DVD 1 is loaded in the receiving unit 19, when reproducing the DVD 1.

When the DVD 1 is loaded in the DVD video player 10 having the above-described structure and the user operates the operation unit 17 to input the instructions to start reproduction of the DVD 1, the system controller 18 controls the servo control unit 13 to drive the spindle motor 11 and the optical pickup 12. Accordingly, the DVD 1 rotates, the video data and the audio data recorded on the DVD 1 are read by means of the optical pickup 12, and the data thus read out are demodulated and decoded by means of the reproduction processing unit 14. The audio signals are outputted to the loudspeaker 15, and the video signals are outputted to the monitor 16. Of the data read out from the DVD 1 by means of the optical pickup 12, the control data and the management data are especially supplied into the systems controller 18. The system controller 18 determines designation/selection of the video data and the audio data to be reproduced, reproduction order and reproduction timing, on the basis of the above-mentioned control data and management data, controls the reproduction processing unit 14 on the basis of such determination.

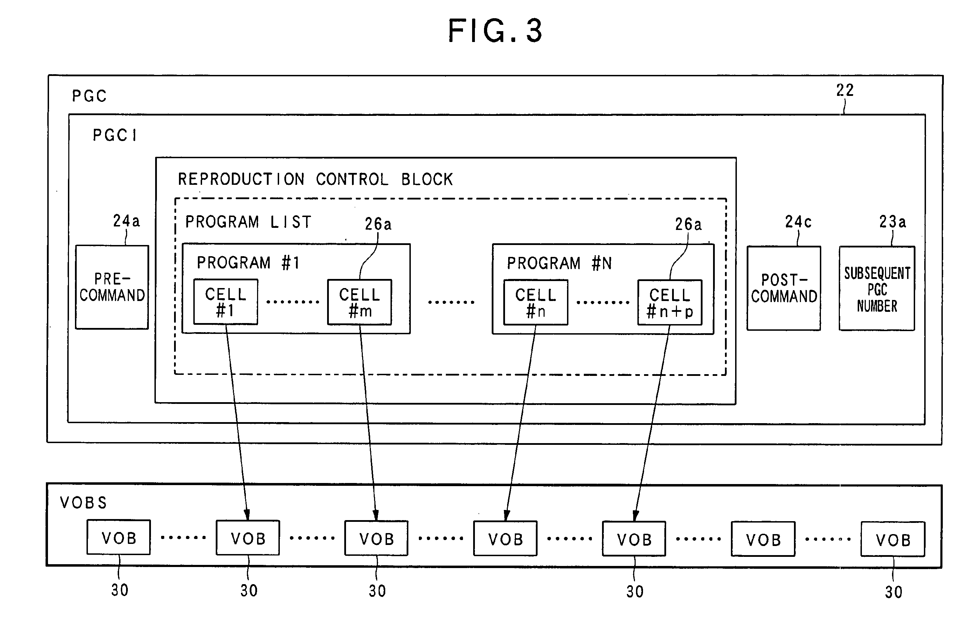

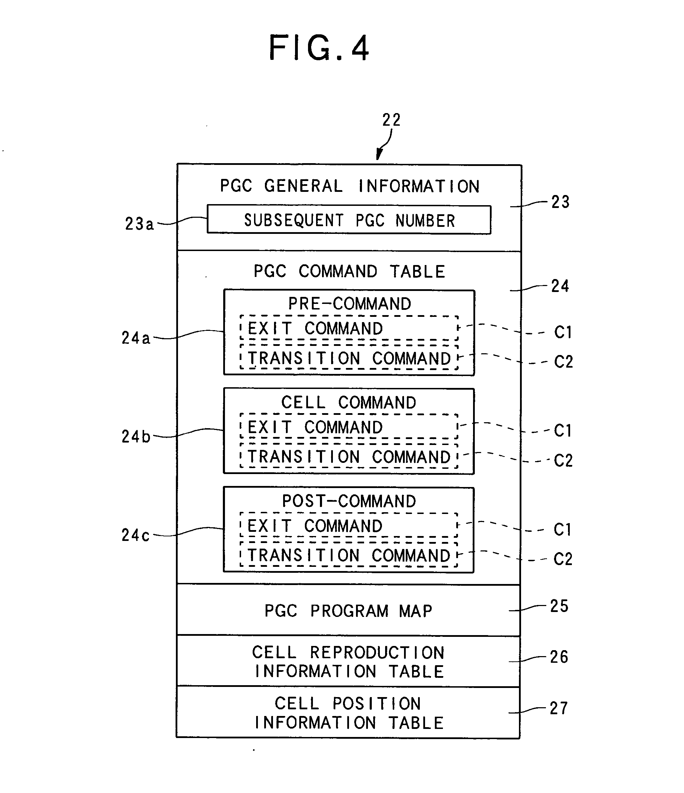

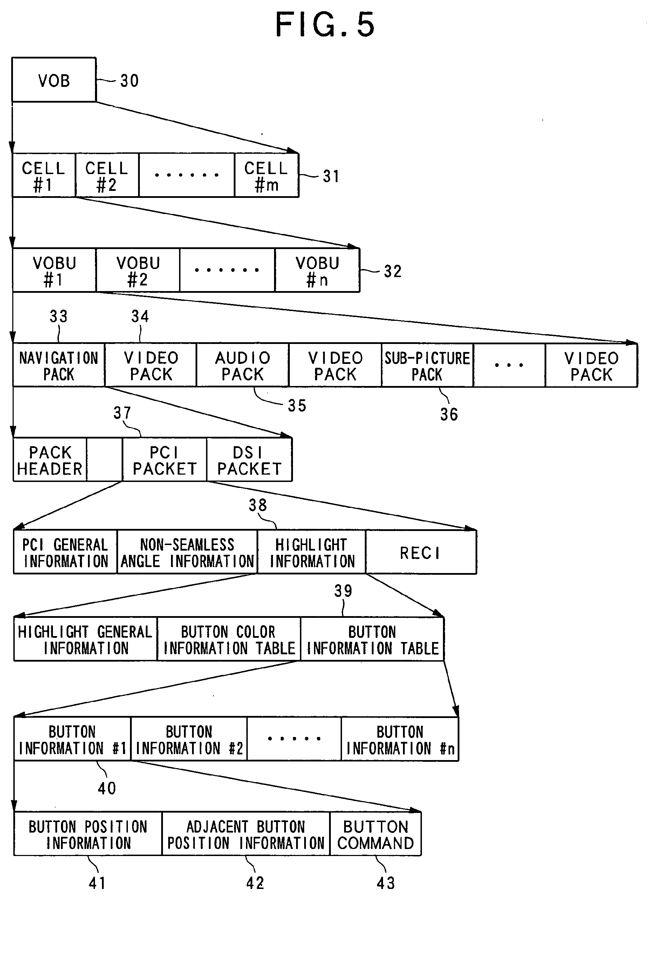

Now, the structure of the data recorded on the DVD 1 will be described with reference to FIGS. 3 to 5. FIG. 3 is a schematic view illustrating the reproduction structure of the data recorded on the DVD 1. FIG. 4 is a schematic view illustrating the structure of a PGCI (Program Chain Information). FIG. 5 is a schematic view illustrating the structure of a VOB (Video Object).

As shown in FIG. 3, the data (i.e., the data constellation) recorded on the DVD 1, which include the content data and the control data for controlling the reproduction of the content data, are based for example on the DVD video standard.

In the data recorded on the DVD 1, a single title (for example, a single production of movie) is theoretically composed of at least one PGC. In case where the single title is composed of a plurality of PGCs, the PGCs are connected to each other and these PGCs are reproduced sequentially and seamlessly, thus performing reproduction of the single title.

The single PGC is theoretically composed of presentation data (i.e., the content data), which are of substantive data for forming images, sound and captions, and navigation data (i.e., the control data) for controlling the reproduction of the presentation data.

As shown in FIG. 4, the navigation data include in particular the PGCI 22. The PGCI 22 is composed of a PGC general information (PGC_GI) 23, a PGC command table (PGC_CMDT) 24, a PGC program map (PGC_PGMAP) 25, a cell reproduction information table (C_PBIT) 26 and a cell position information table (C_POSIT) 27.

A subsequent PGC number (NEXT_PGCN) 23a can be described in the PGC general information 23. The subsequent PGC number means the number of a PGC to be reproduced after completion of reproduction of the current PGC.

Navigation commands of a pre-command 24a, a cell command 24b and a post-command 24c are described in the PGC command table 24. These commands are various commands for controlling the reproduction of a plurality of VOB (Video Object) 30 (see FIG. 3) of which the presentation data are composed. Each of the pre-command 24a, the cell command 24b and the post-command 24c may include an EXIT command C1 and a transition command C2. The EXIT command C1 is a command to halt the reproduction of the corresponding VOB 30 (or the cell 26a). The transition command C2 is a command to change an object to be reproduced from the PGC being currently reproduced to another PGC.

The reproduction mode of the respective cell 26a and the recording position on the DVD 1 are described in accordance with the reproduction order in the cell reproduction information table 26. A link information between the respective cell 26a and the cell 31 in the VOB.

The presentation data are composed of a plurality of VOBs 30 as shown in FIG. 3. Each of the VOBs 30 is composed of a plurality of cells 31 each of which is composed of a plurality of VOBUs 32. Each of the VOBUs 32 may include a navigation pack 33, a video pack 34, an audio pack 35 and a sub-picture pack 36. In addition, the navigation pack 33 includes a PCI packet 37. The PCI packet 37 includes a highlight information 38 having a button information table 39 therein, in which a button information 40 is described. Each of the button information tables 39 may describe a button position information 41, an adjacent button position information 42 and a button command 43. The button command 43, which is to be executed when selection/decision of the button is made, may describe a single navigation command. The button command 43 may describe the above-mentioned EXIT command C1 or the transition command C2.

Reproduction of the PGC having the above-described theoretical structure causes first the pre-command 23a included in the PGCI 22 of the single PGC to be executed as shown in FIG. 3 so as to make a reproduction control on the basis of the pre-command 24a. Then, the cells 26a (i.e., the cells 31 in the VOB 30) are reproduced in order described in the cell reproduction information table 26. Here, the cell command 24b (not shown in FIG. 3) is executed along with the reproduction of the respective cell 26a so as to make a reproduction control on the basis of the cell command 24b. After completion of reproduction of all the cells 26a described in the cell reproduction information table 26, the post-command 24c is executed so as to make a reproduction control on the basis of the post-command 24c. Then, reference to the subsequent PGC number 23a is made. The existence of the other PGC indicated by the subsequent PGC number 23a causes the PGC in question to be reproduced continuously.

The existence of the available highlight information 38 during the reproduction of the cell 26a causes the button to appear on the monitor 16 in accordance with the button information 40. Making the user's selection/decision of the appearing button on the monitor 16 causes the button command 43 corresponding to the button to be executed so as to make a reproduction control on the basis of the button command 43.

Now, description will be given of the setting processing and the reproduction control processing for the subsequent processing, which are to be executed by the system controller 18 of the DVD video player 10, with reference to FIGS. 6 to 8. FIGS. 6 and 7 are flowcharts illustrating the setting processing and the reproduction control processing for the subsequent processing. FIG. 8 is a descriptive view illustrating a setting operation of the subsequent processing.

The DVD video player 10 according to the example of the present invention has functions of detecting whether or not the reproduction of the content data is to be halted based on the control data recorded on the DVD 1, and executing the processing as previously set (i.e., the subsequent processing) in the DVD video player 10, when there is obtain detection results that the reproduction of the content data is to be halted based on the control data recorded on the DVD 1. In addition, the DVD video player 10 has an additional function of setting the contents of the subsequent processing through input of the user's instruction.

In particular, a control program for executing the subsequent processing and another control program for executing the setting of the subsequent processing are stored in the ROM of the system controller 18 so as to execute these control programs when making an initial start of the DVD video player 10 or starting the reproduction.

More specifically, when the initial start of the DVD video player 10 is made, the system waits for the user to input instructions to set the subsequent processing or instructions to start the reproduction, as shown in FIG. 6 ("NO" in Step S1 and "NO" in Step S2).

When the user operates the operation unit 17 to input the instructions to set the subsequent processing, the system controller 18 receives the instructions ("YES" in Step S1) to execute the setting processing for the subsequent processing (Step S3).

In particular, when the user operates the remote controller 17b to input the instructions to set the subsequent processing to the DVD video player 10, the system controller 18 causes selection items as shown in FIG. 8 to be displayed on the monitor 16. The user operates the remote controller 17b to select the contents of the subsequent processing, while looking at the monitor 16. The contents of the subsequent processing include (1) Reproduce a menu, (2) Reproduce a title (the content data), (3) Eject the disc (DVD 1), (4) Reproduce the disc all over again, i.e., carry out the same processing as that to be executed when a recording medium is newly loaded into the data reproduction apparatus, and (5) No procedure is taken (i.e., the subsequent processing: OFF). The user selects and input the desired subsequent processing of these items. When the user selects, as the subsequent processing, the reproduction of a certain title, it is possible for the user to make an arbitrary selection/set of the certain title to be reproduced (see FIG. 8 illustrating the example in which the title No. 2 is selected). However, the contents of the subsequent processing are not limited to those as described above.

The system controller 18 causes the contents of the subsequent processing, which have been selected and inputted by the user, to be stored in the RAM provided in the system controller 18 (Step S4).

Then, when the user inputs instructions to start the reproduction, the system controller 18 receives the instructions ("YES" in Step S2) to start the reproduction control processing, thus starting the reproduction of the presentation data recorded on the DVD 1 under the reproduction control processing.

In the reproduction control processing, the system controller 18 first reads the PGCI 22 of the PGC to be reproduced (see FIG. 3) from the DVD 1 (Step S5) to execute the pre-command 24a included in the PGCI 22 as read out, as shown in FIG. 6. When executing the pre-command 24a, there is made a judgment whether or not the EXIT command C1 has been executed (Step S6).

In case where the EXIT command C1 has been executed upon execution of the pre-command 24a, the reproduction of the presentation data halts (Step S7), the contents of the subsequent processing stored in the RAM of the system controller 18 are read out to execute such subsequent processing (Step S8).

On the other hand, in case where the EXIT command C1 has not been executed upon execution of the pre-command 24a ("NO" in Step S6), there is then made a judgment whether or not the transition command C2 has been executed upon execution of the pre-command 24a (Step S9).

In case where the transition command C2 has been executed upon execution of the pre-command 24a ("YES" in Step S9), the processing returns to Step S5 to reproduce the other PGC designated by the transition command C2.

On the other hand, in case where the transition command C2 has not been executed upon execution of the pre-command 24a ("NO" in Step S9), reproduction of the cell 26a (see FIG. 3) starts (Step S10).

Then, there is made a judgment whether or not the EXIT command C1, which has been described as the button command during the reproduction of the cell 26a, has been executed (Step S11).

More specifically, the existence of the available highlight information during the reproduction of the cell 26a to be reproduced causes the button to appear on the monitor 16 in accordance with the button information 40. Making the user's selection/decision of the appearing button on the monitor 16 causes the button command set for the button to be executed. If the button command is the EXIT command C1, the EXIT command C1 is executed during the reproduction of the cell 26a. The thus execution of the EXIT command C1 during the reproduction of the cell 26a causes the system to enter Step S7 as shown in FIG. 6. The system controller 18 halts the reproduction of the representation data, and reads the contents of the subsequent processing stored in the RAM of the system controller 18 to execute the subsequent processing (Step S8).

On the other hand, in case where the EXIT command C1 has not been executed during the reproduction of the cell 26a, in Step S11 as shown in FIG. 7 ("NO" in Step S11), there is made a judgment whether or not the transition command C2, which has been described as the button command during the reproduction of the cell 26a, has been executed (Step S12).

In case where the transition command C2 has been executed during the reproduction of the cell 26a ("YES" in Step S12), the processing returns to Step S5 as shown in FIG. 6 to reproduce the other PGC designated by the transition command C2.

On the other hand, in case where the transition command C2 has not been executed during the reproduction of the cell 26a ("NO" in Step S12), there is made a judgment whether or not the reproduction of the cell 26a, which is currently being reproduced, is completed (Step S13).

In case where the reproduction of the cell 26a, which is currently being reproduced, has not as yet been completed ("NO" in Step S13), the processing returns to Step S10 to execute repeatedly Steps S10 to S13 until the reproduction of the cell 26a is completed.

When the reproduction of the cell 26a is completed ("YES" in Step S13), the system controller 18 executes the cell command 24b included in the PGCI 22. Then, there is made a judgment whether or not the EXIT command C1 has been executed upon execution of the cell command 24b (Step S14).

In case where the EXIT command C1 has been executed upon execution of the cell command 24b, the processing returns to Step S7 to halt the reproduction of the presentation data, and the contents of the subsequent processing stored in the RAM of the system controller 18 are read out to execute the subsequent processing (Step S8).

On the other hand, in case where the EXIT command C1 has not been executed upon execution of the cell command 24b ("NO" in Step S14), there is made a judgment whether or not the transition command C2 has been executed upon execution of the cell command 24b (Step S15).

In case where the transition command C2 has been executed upon execution of the cell command 24b ("YES" in Step S15), the processing returns to Step S5 as shown in FIG. 6 to reproduce the other PGC designated by the transition command C2.

On the other hand, in case where the transition command C2 has not been executed upon execution of the cell command 24b ("NO" in Step S15), there is made a judgment whether or not the other cell 26a to be reproduced next exists (Step S16).

In case where, of the cells 26a for constituting the PGC, which is currently subjected to the reproduction processing, the cells 26a to be reproduced still exist, namely, the reproduction of the PGC has not as yet been completed, Steps S10 to S16 are repeatedly executed to continue the reproduction of the cell 26a so that the remaining cells are reproduced in sequence.

When, of the cells 26a for constituting the PGC, the reproduction of the last cell 26a to be reproduced is completed, the system recognizes the situation ("NO" in Step S16) and the post-command 24c (see FIG. 3) is then executed. Then, there is made a judgment whether or not the EXIT command C1 has been executed upon execution of the post-command 24c (Step S17).

In case where the EXIT command C1 has been executed upon execution of the post-command 24c, the reproduction of the presentation data halts (Step S7), and the contents of the subsequent processing stored in the RAM of the system controller 18 are read out to execute such subsequent processing (Step S8), as shown in FIG. 6.

On the other hand, in case where the EXIT command C1 has not been executed upon execution of the post-command 24c ("NO" in Step S17), there is made a judgment whether or not the transition command C2 has been executed upon execution of the post-command 24c (Step S18).

In case where the transition command C2 has been executed upon execution of the post-command 24c ("YES" in Step S18), the processing returns to Step S5 as shown in FIG. 6 to reproduce the other PGC designated by the transition command C2.

On the other hand, in case where the transition command C2 has not been executed upon execution of the post-command 24c ("NO" in Step S18), there is made reference to the subsequent PGC number 23a (see FIG. 3) included in the PGCI 22 of the PGC, which is currently subjected to the reproduction processing. Then, there is made a judgment whether or not the PGC designated by the subsequent PGC number 23a (Step S19).

In case where the PGC designated by the subsequent PGC number 23a exists ("YES" in Step S19), the processing returns to Step S5 as shown in FIG. 6 to reproduce the PGC.

On the other hand, in case where the PGC designated by the subsequent PGC number 23a does not exists ("NO" in Step S19), the reproduction of the presentation data halts (Step S7), and the contents of the subsequent processing stored in the RAM of the system controller 18 are read out to execute such subsequent processing (Step S8), as shown in FIG. 6.

The execution of the subsequent processing is completed, thus leading to completion of the reproduction control processing.

According to the DVD video player 10 of the example of the present invention, the reproduction of the presentation data halts and there is executed the subsequent processing as previously set by the user, in case where (1) the pre-command 24a, the cell command 24b, the post-command 24c or the button command 43 is executed upon reproduction of the data recorded on the DVD 1, and the EXIT command C1 is also executed, or (2) any subsequent PGC number 23a designated by the PGC to be reproduced next does not exist at the time when the execution of the post-command 24c of the PGC, which is currently subjected to the reproduction processing is completed. It is therefore possible to execute automatically the processing as desired by the user at the time when the reproduction of the title recorded on the DVD 1 halts due to execution of the EXIT command or no existence of the subsequent PGC. As a result, the operability and convenience of the DVD video player 10 can be improved. When the DVD video player 10 is used for example as a video/audio reproduction apparatus, which is to be mounted on a car, it is possible to improve a driving environment for a driver.

According to the DVD video player 10 of the example of the present invention, the execution of the setting processing of the subsequent processing enables the user to select/set the subsequent processing as desired through the remote controller 17b. It is therefore possible to cause the DVD video player 10 to operate in reproduction along the user's inclination.

In addition, in the DVD video player 10 according to the example of the present invention, the reproduction of the menu is selectable as the contents of the subsequent processing. Accordingly, this makes it possible for a user to take a look at the menu after the halt of the reproduction and cause the desired contents data to be rapidly reproduced, thus providing useful effects.

In the DVD video player 10 according to the example of the present invention, the reproduction of a certain title (content data) is selectable as the contents of the subsequent processing. This makes it possible to provide a continuous reproduction of the title.

In the DVD video player 10 according to the example of the present invention, the ejection of the disc is selectable as the contents of the subsequent processing. This makes possible for the user to replace the DVD one after another to reproduce it.

In the DVD video player 10 according to the example of the present invention, the virtual reloading of the disc, namely, the same processing as that to be executed when a disc is loaded into the player can be set as the contents of the subsequent processing. This facilitates to reproduce the same disc all over again.

In the above-described example of the present invention, the data based on the DVD video standard are reproduced. However, the present invention is not limited only to such an example, and is also applicable to video data, audio data and others based on the other standard, as long as data constellation of, which includes content data and control data for controlling the reproduction of the content data, are received and the content data are reproduced on the basis of the control data.

In the above-described example of the present invention, there is exemplified the DVD video player for reproducing the data recorded on the DVD. However, the present invention is not limited only to such an example, and is also applicable to a player for reproducing a compact disc, a mini disc, a magneto-optical disc, a card-type memory and the other recording medium, or a data reproduction apparatus for receiving and reproducing data delivered via a digital television broadcasting or the internet.

In the above-described example of the present invention, there is exemplified the DVD video player for reproducing the single DVD. However, the present invention is not limited only to such an example, and is also applicable to a player, which receives a plurality of discs and selects any one of these discs to reproduce it (for example, a player provided with a disc changer such as a CD changer or a DVD changer). In this case, replacing the disc with another disc may be carried out as the subsequent processing. In case where the disc changer is connected to the player as shown in FIG. 8, the selection item of "Reproduce the next disc" appears on the monitor 16 in the setting processing of the subsequent processing (Step S3 as shown in FIG. 6). The user can select the item of "Reproduce the next disc" as the contents of the subsequent processing, while looking at the monitor 16. This makes it possible to reproduce the new disc received in the disc changer to provide a continuous reproduction, when the EXIT command is executed.

The present invention may be modified accordingly within the subject matter of the invention, which can be read from claims and the whole description, and without departing therefrom. The technical idea of the present invention includes the modified data reproducing apparatus, the modified data reproducing method and the modified computer program for realizing the functions thereof.

## Claims

1. An apparatus for reproducing data comprising:
a reproduction device (14) for receiving a data constellation, which includes content data and control data for controlling reproduction of said content data, and reproducing said content data based on said control data;
a detection device (18) for detecting whether or not the reproduction of said content data by means of said reproduction device (14) is to be halted based on said control data; and
a subsequent processing-execution device for executing a subsequent processing as previously set, when said detection device (18) obtains detection results that the reproduction of said content data by means of said reproduction device (14) is to be halted.

2. The apparatus as claimed in Claim 1, further comprising:
a subsequent processing-setting device for setting contents of said subsequent processing, which is to be executed by means of said subsequent processing-execution device, through input of a user's instruction.

3. The apparatus as claimed in Claim 1 or 2, wherein:
said detection device (18) detects whether the control data including a command to halt the reproduction of said content data by means of said reproduction device (14) have been used or not.

4. The apparatus as claimed in any one of Claims 1 to 3, wherein:
said detection device (18) detects no existence of the control data designating content data, which are to be reproduced next by means of said reproduction device (14).

5. The apparatus as claimed in any one of Claims 1 to 4, wherein:
said subsequent processing-execution device reproduces, as said subsequent processing, a menu for said content data.

6. The apparatus as claimed in any one of Claims 1 to 4, wherein:
said subsequent processing-execution device reproduces, as said subsequent processing, content data designated by the user.

7. The apparatus as claimed in any one of Claims 1 to 4, wherein:
said subsequent processing-execution device outputs, as said subsequent processing, a message for prompting the user to input a predetermined instruction.

8. The apparatus as claimed in any one of Claims 1 to 4, wherein:
said reproduction device (14) comprises a receiving unit (19) for receiving a recording medium (1) in which said data constellation has been recorded, and a reading unit (12) for reading said data constellation from said recording medium (1) to reproduce said content data based on said control data; and
said subsequent processing-execution device unloads, as said subsequent processing, said recording medium (1) from said receiving unit (19).

9. The apparatus as claimed in any one of Claims 1 to 4, wherein:
said reproduction device (14) comprises a reading unit (12) for reading said data constellation from one of a plurality of recording media to reproduce said content data based on said control data; and
said subsequent processing-execution device replaces, as said subsequent processing, the recording medium (1) with another recording medium (1) from which said data constellation is to be read out.

10. The apparatus as claimed in any one of Claims 1 to 4, wherein:
said reproduction device (14) reads the data constellation from the recording medium (1) in which said data constellation has been recorded, and reproduce said content data based on said control data included in the data constellation as read out; and
said subsequent processing-execution device conducts, as said subsequent processing, a reproduction termination processing for the content data recorded in said recording medium (1) and then, conducts a reproduction preparation processing for a next reproduction start.

11. The apparatus as claimed in any one of Claims 1 to 4, wherein:
said subsequent processing-execution device offers, as said subsequent processing, a plurality of processing to the user and outputs a message for prompting the user to select any one of said plurality of processing.

12. A computer program to be executed by a computer, wherein said program causes said computer to function as the apparatus as claimed in any one of Claims 1 to 11 for reproducing data.

13. A method for reproducing data comprising:
a reproduction step for receiving a data constellation, which includes content data and control data for controlling reproduction of said content data, and reproducing said content data based on said control data;
a detection step for detecting whether or not the reproduction of said content data in said reproduction step is to be halted based on said control data; and
a subsequent processing-execution step for executing a subsequent processing as previously set, when there are obtained detection results that the reproduction of said content data in said reproduction step is to be halted.
